# EUROPÄISCHE PATENTSCHRIFT

(11) **EP 1 060 094 B1**
(45) Veröffentlichungstag und Bekanntmachung des Hinweises auf die Patenterteilung: **17.10.2001**
(21) Anmeldenummer: 98951504.4
(22) Anmeldetag: 08.10.1998
(51) Int. Cl.: B60R 13/08, G10K 11/162, G10K 11/172

(54) **SCHALLSCHUTZABSCHIRMUNG**
SOUND PROTECTIVE SCREEN
ECRAN INSONORISANT

(30) Priorität: 03.03.1998 DE 29803675 U
(43) Veröffentlichungstag der Anmeldung: 20.12.2000
(73) Patentinhaber: FAIST Automotive GmbH & Co. KG, 86381 Krumbach (DE)
(72) Erfinder: PFAFFELHUBER, Klaus, D-89312 Günzburg (DE)
(74) Vertreter: Müller, Hans-Jürgen, Dipl.-Ing.
(86) Internationale Anmeldenummer: EP9806395
(87) Internationale Veröffentlichungsnummer: WO9944861

(56) Entgegenhaltungen:
- EP-A- 0 214 559
- EP-A- 0 640 951
- WO-A-96/08812
- DE-A- 3 623 789
- DE-A- 4 103 039
- DE-C- 3 705 754
- DE-U- 8 201 511
- FR-A- 2 490 383
- US-A- 5 587 564

## Beschreibung

Die Erfindung bezieht sich auf eine Schallschutzabschirmung mit einer Kunststoff aufweisenden und mit Vertiefungen bzw. Kammern versehenen Materialschicht.

Eine derartige Schallschutzabschirmung ist bereits bekannt (DE-GM 1 711 731, EP 0 640 951 A2). Dabei besteht die Materialschicht aus einer porösen Weichschicht aus Schaumstoff beispielsweise unter Verwendung von Polyurethan (PU). Die Kammern sind z.B. als halbkugelige Vertiefungen oder als Helmholtz-Kammern ausgebildet, bei denen eine Verbindung zwischen der Kammer und derjenigen Außenseite der Materialschicht hergestellt ist, aus welcher der Schall einfällt, damit die Schallwellen durch solche Zutrittsöffnungen in die Kammern eintreten können und Schallwellenenergie durch Resonanz innerhalb der Kammern unter Mitwirkung der weichen Kammerwände absorbiert und daher an ihrer Weiterleitung gehindert werden kann. Die Kammern weisen bei dieser und bei anderen bekannten Schallschutzabschirmungen (DE 31 17 368 A1, EP 0 214 559 A3) zylindrische oder kegelstumpfförmige Konfigurationen auf. Darüber hinaus ist es auch bekannt (GB 2 027 255 A), im Querschnitt etwa kreisförmige Hohlraumkammern in geschlossenzelligen Polyethylenschaum anzubringen, die sich durch schmale Schlitze nach einer Außenseite öffnen, so daß der Schall durch diese schlitzförmigen Zutrittsöffnungen in die als Helmholtz-Resonatoren dienenden kammerartigen Hohlräume eindringen kann.

Es ist auch bekannt (DE-OS 41 03 039), derartige mit Kammern versehene Schaumstoffschichten zusätzlich mit einer mattenartigen Schwerschicht abzudecken, die aus beispielsweise PU-Schwerschaum besteht, der mit schweren Füllstoffen, wie Schwerspat, gefüllt ist.

Ferner sind gattungsgemässe mit Weichschichten verklebte Schwerschichten bekannt (DE-U-7 733 751), bei denen Vertiefungen die Aufgabe haben, die Außenfläche in voneinander getrennte Einzelflächen aufzuteilen, die unabhängig voneinander schwingen können und unterschiedliche Flächen aufweisen.

Der Erfindung liegt die Aufgabe zugrunde, die Herstellung einer Schallschutzabschirmung ohne wesentliche Beeinträchtigung der schallabschirmenden und schalldämpfenden bzw. schalldämmenden Eigenschaften zu vereinfachen.

Die Erfindung ist im Anspruch 1 gekennzeichnet und in Unteransprüchen sind weitere Ausbildungen derselben beansprucht. Auch in der folgenden Beschreibung sind bevorzugte Ausführungsformen auch anhand der Zeichnung herausgestellt.

Gemäß der Erfindung wird die Schwerschicht mit als Vertiefungen ausgebildeten Kammern versehen, so daß sich die bisher für notwendig erachtete Verwendung einer zusätzlichen Weichschaumschicht erübrigt. Die Kammern formen an der Außenseite insbesondere ein wabenartig strukturiertes Gebilde (gelochte Außenseite).

Unter einer "Schwerschicht" wird hier folgendes verstanden: Die Schwerschicht besteht im wesentlichen aus einem thermoplastischen Kunststoff, bevorzugt Polyurethan oder Polypropylen, der mit sogen. "Schwerstoffen" versetzt ist. Hierzu eignet sich besonders Schwerspat (BaSO₄). Die Schwerschicht sollte eine Materialdichte von mindestens 1 g/cm³ aufweisen. Bevorzugte Materialdichten der Schwerschicht liegen im Bereich zwischen 0,5 g/cm³ und 5 g/cm³, insb. zwischen 1,5 und 3 g/cm³. Auch Polyolefin-Elastomere (POE) eignen sich gut für die Schwerschicht.

Es hat sich überraschenderweise gezeigt, daß die Materialeigenschaften dieser Schwerschicht in Verbindung mit deren durch die Kammern erhaltenen Strukturierung zu einer sehr beträchtlichen Dämmung von Schallenergie führen. Die physikalischen Ursachen hierfür sind noch nicht genügend wissenschaftlich erklärbar. Es wird angenommen, daß die von den Kammern und Kammerwänden gebildeten Feder-Masse-Systeme hierzu wesentlich beitragen; dabei entspricht der Kammern in Richtung zum Schalleinfall abschließende Schwerschichtteil der "Masse" und entsprechen die Kammern sowie die diese seitlich begrenzenden Teile der Schwerschicht, nämlich die Kammerwände, der "Feder" des Masse-Feder-Systems.

Dabei empfiehlt es sich, die Böden der Kammern kugelkalottenförmig auszubilden. Die Kammern öffnen sich nach mindestens einer Außenseite der Schwerschicht. Wenn die Schwerschicht mit solchen Kammern an beiden Außenseiten versehen ist, ergeben sich weitere Verbesserungen. Im Unterschied zu den bekannten Kammern, die als Helmholtz-Resonatoren wirken, öffnen sich die Kammern in der Schwerschicht zur Außenseite ohne Verengungen, wie dies noch anhand der Zeichnung näher erläutert wird.

Es werden porenlose Schwerschichten bevorzugt.

Nach einer bevorzugten Ausbildung der Erfindung wird eine Außenseite der Schwerschicht mit einer dünnen Metallschicht, insb. einer Aluminiumfolie abgedeckt, wodurch die Schallschutzabschirmung gleichzeitig auch als "Hitzeschild" verwendbar ist. Diese Ausbildung der Erfindung eignet sich vor allem zur Anwendung in heißen Bereichen wie in der Umgebung von Verbrennungsmotoren und deren Abgas- bzw. Auspuffkanälen in Kraftfahrzeugen. Die Aluminiumfolie wirkt über den Hohlräume bildenden Kammern, welche die Schwerschicht in Richtung zum Schalleinfall bilden, als Membranabsorber.

Ausführungsbeispiele für die Erfindung werden anhand der Zeichnungen im folgenden näher erläutert. Dabei zeigen:
- Figur 1: einen schematischen Querschnitt durch eine dreidimensional geformte Schallschutzabschirmung, die als Stirnwandabdichtung zwischen Fahrgastraum und Motorraum eines Kraftfahrzeugs an einem dort befindlichen Trennblech befestigt ist;
- Figur 2: einen vergrößerten Querschnitt durch den Bereich S von Figur 1, und zwar ohne Darstellung des Bleches;
- Figur 3: eine Aufsicht auf einen Teil der Schallschutzabschirmung von Figur 2 von unten;
- Figur 4: einen schematischen vergrößerten Querschnitt durch eine andere Ausbildung der Erfindung;
- Figur 5: einen entsprechenden Querschnitt durch eine weitere Ausbildung der Erfindung;
- Figur 6: einen Querschnitt durch eine weitere Ausbildung der Erfindung und
- Figur 7: einen Querschnitt durch eine Variante der Erfindung.

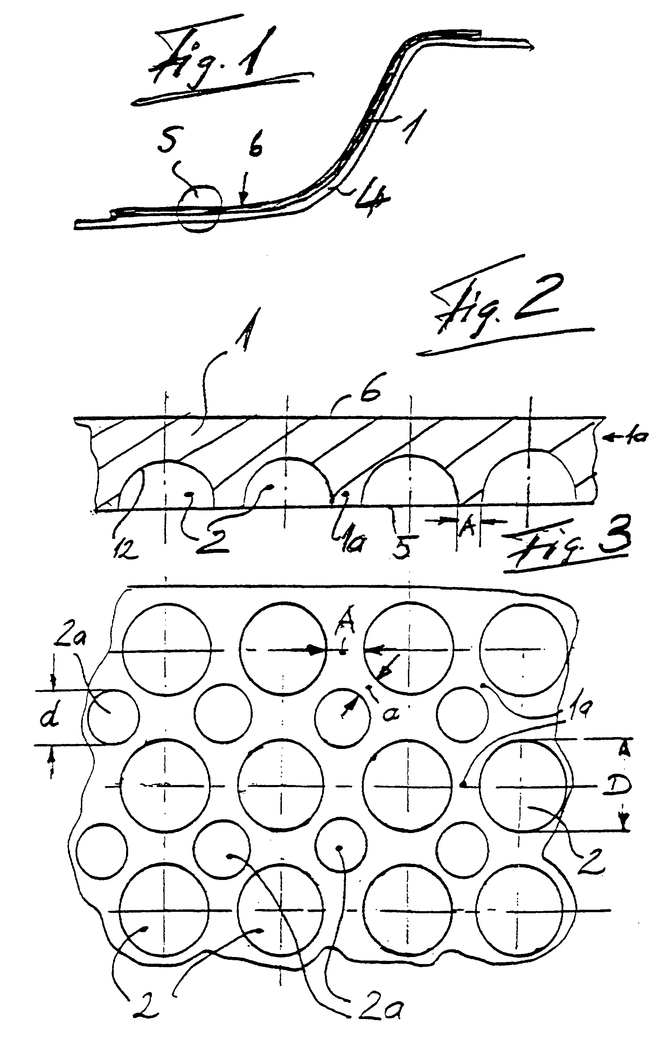

Gemäß Figur 1 ist eine erfindungsgemäße Schallschutzabschirmung, gebildet durch eine Schwerschicht 1, derart verformt, daß sie sich den Konturen des Bleches 4 zwischen Fahrgastraum und Motorraum im wesentlichen anpaßt und mit seiner Außenseite 6 in Richtung zum Motorraum weist.

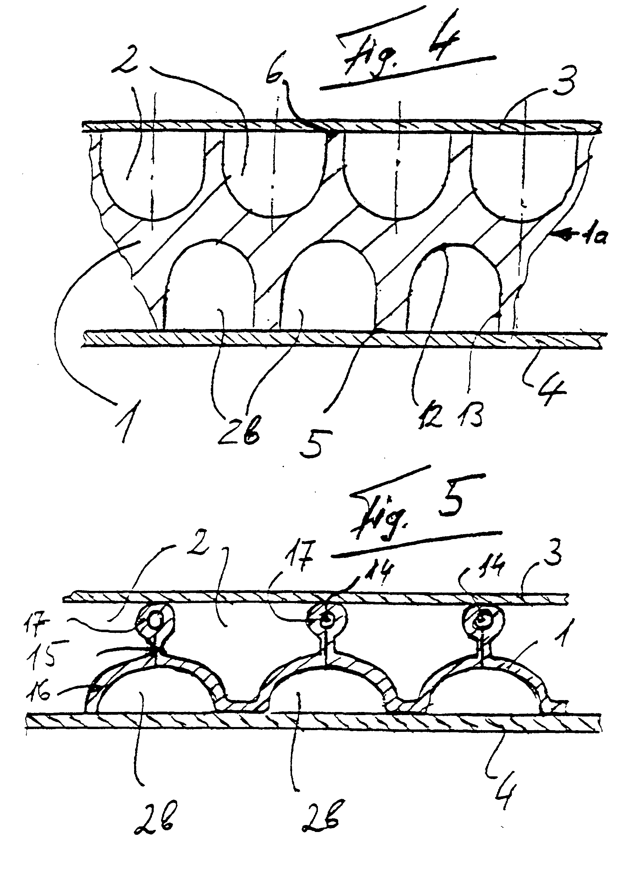

Gemäß Figur 2 ist die Schwerschicht 1, welche aus porenlosem PUR-Schwerschaum besteht, an der hier nach unten weisenden Außenseite 5 mit halbkugeligen Kammern 2 versehen, deren kalottenförmigen Kammerböden 12 in die Außenseite 5 übergehen und dort um den Abstand A voneinander beabstandet sind, so daß Stege 1a der Schwerschicht 1 zwischen Nachbarkammern 2 und die Luftpolster als "Feder" für das Feder-Masse-System zur Verfügung stehen. An der oberen Außenseite 6, d.h. dem Schalleinfall zugewandt, ist die Schwerschicht 1 glatt; sie wirkt dort (1a) als "Masse" des Feder-Masse-Systems.

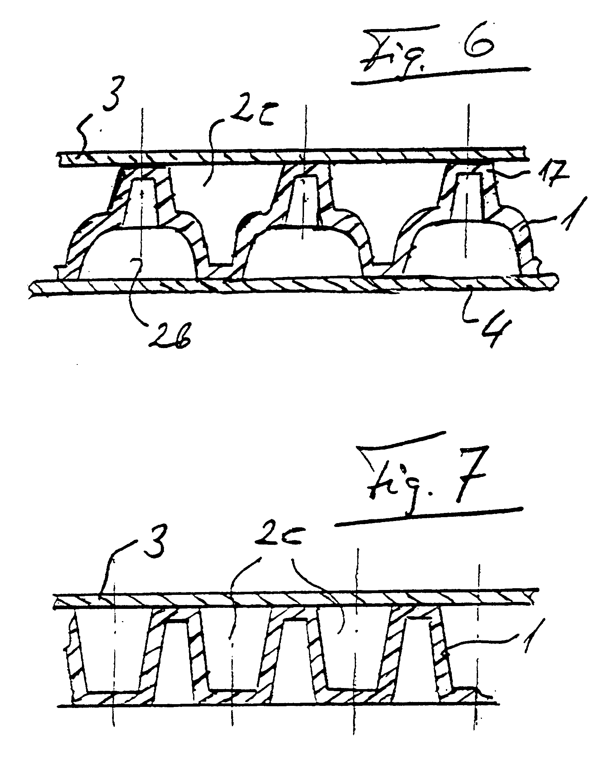

Wie deutlich aus Figur 3 ersichtlich ist, sind in den Zwischenräumen zwischen den größeren halbkugeligen Kammern 2 kleinere und ebenfalls halbkugelige Kammern 2a mit dem Durchmesser d angeordnet, wodurch sich dort die Abstände A zwischen größeren Nachbarkammern 2 und daher die Dicke der Stege 1a vermindern zum Abstand a zwischen jeweils einer größeren Kammer 2 und einer kleineren Kammer 2a. Es werden etwa folgende Dimensionen bevorzugt:
- D =: 20 mm
- d =: 10 mm
- A =: 3 mm
- a =: 1 mm.

Bei der Ausbildungsform von Figur 4 sind die Kammern 2, 2b tiefer ausgebildet. An die nalbkugeligen Teile mit den Kammerböden 12 schließen sich zylinderförmige Teile mit den zylindrischen Mantelflächen 13 an. Außerdem öffnen sich Kammern 2, 2b nach beiden Außenseiten 5 und 6 der Schwerschicht 1. Die obere Außenseiten 6 der Schwerschicht 1 und die dort sich zur Außenseite 6 öffnenden Kammern 2 sind abgedeckt durch eine Metallfolie 3 aus Aluminium mit einer Schichtdicke von 0,1 mm. Diese Metallfolie 3 wirkt im Bereich der Hohlkammern, d.h. der durch diese Metallfolie 3 abgedeckten Kammern 2 als Membranabsorbersystem.

Die andere nach unten weisende Außenseite 5 der Schwerschicht 1 ist auf das Blech 4 aufgesetzt. Der mittlere Teil (1a) der Schwerschicht 1, der die unteren Kammern 2a nach oben, d.h. zum Schalleinfall hin abdeckt, wirkt als "Masse", während die unteren Kammerm 2b und deren seitlichen Mantelflächen 13 mit derem Schwerschichtmaterial als "Federn" wirken. Der Gesamtaufbau bildet daher ein Feder-Masse-Absorbersystem.

Eine erfindungsgemäße Schallschutzabschirmung ist sehr einfach herstellbar, beispielsweise durch Spritzgießen oder Spritzpressen.

Eine noch einfacher Herstellung erfolgt durch Hindurchziehen der noch teigigen Masse des Schwerschichtmaterials durch einen von zwei Walzen gebildeten Spalt. Dabei sind die Walzenoberflächen mit kleinen Erhöhungen versehen, welche sich in das teigförmige Material eindrücken und dort die Kammern 2, 2a einprägen, die dann nach dem Verfestigen der teigigen Masse ihre Form behalten. Im Falle der Abdeckung durch eine Aluminiumschicht wird diese anschließend auf die mit den Kammern versehene Schwerschicht aufkaschiert.

Nach Figur 5 erfolgt die Herstellung dadurch, daß ein Netz sich kreuzender dünner Stäbe aus z.B. Kunststoff auf eine flach aufgespannte und noch teigige Schwerfolie aufgelegt wird. Während der Folienrand in einem Rahmen fest eingespannt bleibt, wird die Schwerfolie mittels Vakuum durch das Netz der Stäbe in ein Formnest gezogen, wodurch sich nun um die Stäbe, die in Figur 5 mit 14 versinnbildlicht sind, Schwerfolienmasse ansammelt, das über die Materialstege 15 mit dem noch teigigen Folienrest 16 verbunden bleibt, welcher zur Bildung von Kammern 2 an den Stegen 15 bauchartig verformt wird. An die Köpfe 17 der Materialstege 15 ist die Aluminiumfolie 3 angeklebt. Anschließend erfolgt das Verfestigen des derart verformten Schwerfolienkörpers.

Gemäß Figur 6 sind die Kammern 2b durch glockenartig profilierte Schwerschichtteile 1 gebildet, deren Köpfe 17 an der Aluminiumfolie 3 anstoßen.

Bei dem Beispiel von Figur 7 ist die EPDM Schwerschicht 1 als wabenähnliches Gebilde einzelner topfartig profilierter Teile geformt.

## Patentansprüche

1. Schallschutzabschirmung mit einer Kunststoff aufweisenden Schwerschicht (1), von der sich Vertiefungen nach mindestens einer Außenseite (5, 6) der Schwerschicht (1) öffnen,
**dadurch gekennzeichnet,**
**daß** Vertiefungen der weichschichtfreien Schwerschicht (1) als Kammern (2, 2a) ausgebildet sind, die an mindestens einer Außenseite (5, 6) der Schwerschicht (1) ein wabenartig strukturiertes Gebilde formen und/oder kalottenartig geformte Kammerböden (12) und/oder zylinderförmige Kammerwände (13) zwischen den Kammerböden (12) und mindestens einer der beiden Außenseiten (5, 6) der Schwerschicht (1) aufweisen und/oder im Querschnitt topf- oder glockenförmige Kammerwände (13) bilden.

2. Schallschutzabschirmung nach Anspruch 1, **dadurch gekennzeichnet, daß** die Abstände (A, a) zwischen benachbarten Kammern (2, 2a) an der betreffenden Außenseite (5, 6) der Schwerschicht (1) wesentlich weniger betragen als die Durchmesser (D, d) bzw. Breite der betreffenden Kammern (2, 2a).

3. Schallschutzabschirmung nach Anspruch 1 oder 2,
**dadurch gekennzeichnet,**
**daß** die Schwerschicht (1) Polyurethan aufweist.

4. Schallschutzabschirmung nach einem der vorhergehenden Ansprüche,
**dadurch gekennzeichnet,**
**daß** die Schwerschicht (1) POE aufweist.

5. Schallschutzabschirmung nach einem der vorhergehenden Ansprüche,
**dadurch gekennzeichnet,**
**daß** die Schwerschicht (1) EPDM aufweist.

6. Schallschutzabschirmung nach einem der vorhergehenden Ansprüche,
**dadurch gekennzeichnet,**
**daß** die Schwerschicht (1) Polypropylen aufweist.

7. Schallschutzabschirmung nach einem der vorhergehenden Ansprüche,
**dadurch gekennzeichnet,**
**daß** die Schwerschicht (1) Schwerspat (BaSO₄) aufweist.

8. Schallschutzabschirmung nach einem der vorhergehenden Ansprüche,
**dadurch gekennzeichnet,**
**daß** sich Kammern (2, 2a) nach beiden Außenseiten (5, 6) der Schwerschicht (1) öffnen.

9. Schallschutzabschirmung nach einem der vorhergehenden Ansprüche,
**dadurch gekennzeichnet,**
**daß** die Schwerschicht (1) porenartige Hohlräume aufweist.

10. Schallschutzabschirmung nach einem der vorhergehenden Ansprüche,
**dadurch gekennzeichnet,**
**daß** die Schwerschicht (1) an einer Außenseite (6) mit einer Metallschicht (3) abgedeckt ist.

11. Schallschutzabschirmung nach einem der vorhergehenden Ansprüche,
**dadurch gekennzeichnet,**
**daß** die Schwerschicht eine Materialschichtdicke zwischen 1 mm und 40 mm aufweist.

12. Schallschutzabschirmung nach Anspruch 13,
**dadurch gekennzeichnet,**
**daß** die Materialdichte der Schwerschicht (1) zwischen 0,5 und 5 g/cm³ beträgt.

## Claims

1. Sound-absorbing shield including a heavy-weight layer (1) from which recesses open towards at least one outside (5, 6) of said heavy-weight layer (1),
**characterised in**
**that** recesses of said heavy-weight layer (1) free of a soft layer are configured as chambers (2, 2a) forming a configuration of honey-comb structure on at least one outside (5, 6) of said heavy-weight layer (1) and/or comprise dome-shaped chamber bottoms (12) and/or cylindrical chamber walls (13) between said chamber bottoms (12) and at least one of the two outsides (5, 6) of said heavy-weight layer (1) and/or form chamber walls (13) having a pot- or bell-shaped cross-sectional profile.

2. Sound-absorbing shield according to Claim 1, **characterised in that** the distances (A, a) between adjacent chambers (2, 2a) on the respective outside (5, 6) of said heavy-weight layer (1) are substantially smaller than the diameters (D, d) or widths of the respective chambers (2, 2a).

3. Sound-absorbing shield according to Claim 1 or 2,
**characterised in**
**that** said heavy-weight layer (1) comprises polyurethane.

4. Sound-absorbing shield according to any of the preceding Claims,
**characterised in**
**that** said heavy-weight layer (1) comprises POE.

5. Sound-absorbing shield according to any of the preceding Claims,
**characterised in**
**that** said heavy-weight layer (1) comprises EPDM.

6. Sound-absorbing shield according to any of the preceding Claims,
**characterised in**
**that** said heavy-weight layer (1) comprises polypropylene.

7. Sound-absorbing shield according to any of the preceding Claims,
**characterised in**
**that** said heavy-weight layer (1) comprises heavy spar (BaSO₄).

8. Sound-absorbing shield according to any of the preceding Claims,
**characterised in**
**that** said chambers (2, 2a) open to both outsides (5, 6) of said heavy-weight layer.

9. Sound-absorbing shield according to any of the preceding Claims,
**characterised in**
**that** said heavy-weight layer (1) comprises pore-like cavities.

10. Sound-absorbing shield according to any of the preceding Claims,
**characterised in**
**that** said heavy-weight layer (1) is covered by a metal layer (3) on one outside (6).

11. Sound-absorbing shield according to any of the preceding Claims,
**characterised in**
**that** the thickness of the material layer in said heavy-weight layer ranges from 1 mm to 40 mm.

12. Sound-absorbing shield according to any of the preceding Claims,
**characterised in**
**that** the density of the material in said heavy-weight layer (1) is within the range from 0.5 to 5 g/cm³.

## Revendications

1. Ecran insonorisant à une couche lourde comprenant une matière synthétique, à partir de laquelle des creux s'ouvrent vers au moins une face extérieure (5, 6) de ladite couche lourde,
**caractérisé en**
que des creux de ladite couche lourde (1), qui ne présente pas une couche molle, sont configurés sous forme de chambres (2, 2a), qui constituent une configuration à structure à nid d'abeilles sur au moins une face extérieure (5, 6) de ladite couche lourde (1), et/ou comprennent des fonds de chambre (12) à voûte en calotte et/ou des parois de chambre cylindriques (13) entre lesdits fonds de chambre (12) et au moins une des deux faces extérieures (5, 6) de ladite couche lourde (1) et/ou constituent des parois de chambre (13) à un profil en travers sous forme d'un pot ou d'une cloche.

2. Ecran insonorisant selon la revendication 1, **caractérisé en que** les distances (A, a) entre des chambres adjacentes (2, 2a) sur la face extérieure respective (5, 6) de ladite couche lourde (1) sont essentiellement plus courtes **que** les diamètres (D, d) ou largeurs des chambres respectives (2, 2a).

3. Ecran insonorisant selon la revendication 1 ou 2,
**caractérisé en**
que ladite couche lourde (1) comprend de polyuréthanne.

4. Ecran insonorisant selon la revendication selon une quelconque des revendications précédentes,
**caractérisé en**
que ladite couche lourde (1) comprend du POE.

5. Ecran insonorisant selon la revendication selon une quelconque des revendications précédentes,
**caractérisé en**
que ladite couche lourde (1) comprend de l'EPDM.

6. Ecran insonorisant selon la revendication selon une quelconque des revendications précédentes,
**caractérisé en**
que ladite couche lourde (1) comprend du polypropylène.

7. Ecran insonorisant selon la revendication selon une quelconque des revendications précédentes,
**caractérisé en**
que ladite couche lourde (1) comprend spath pesant (BaSO₄).

8. Ecran insonorisant selon la revendication selon une quelconque des revendications précédentes,
**caractérisé en**
que lesdites chambres (2, 2a) s'ouvrent aux deux faces extérieures (5, 6) de ladite couche lourde.

9. Ecran insonorisant selon la revendication selon une quelconque des revendications précédentes,
**caractérisé en**
que ladite couche lourde (1) comprend des creux en pores.

10. Ecran insonorisant selon la revendication selon une quelconque des revendications précédentes,
**caractérisé en**
que ladite couche lourde (1) est recouverte par une couche métallique (3) sur une face extérieure (6).

11. Ecran insonorisant selon la revendication selon une quelconque des revendications précédentes,
**caractérisé en**
que l'épaisseur de la couche de matériau dans ladite couche lourde se trouve dans la gamme entre 1 mm et 40 mm.

12. Ecran insonorisant selon la revendication selon une quelconque des revendications précédentes,
**caractérisé en**
que la densité du matériau dans ladite couche lourde (1) se trouve dans la gamme entre 0.5 et 5 g/cm³.
